# EUROPEAN PATENT APPLICATION

(11) **EP 1 903 724 A1**
(43) Date of publication of application: **26.03.2008**
(21) Application number: 06761414.9
(22) Date of filing: 13.07.2006
(51) Int. Cl.: H04L 12/56

(54) **METHOD AND SYSTEM FOR CONVERTING A MESSAGE**

(30) Priority: 14.07.2005 CN 200510083943
(71) Applicant: Huawei Technologies Co., Ltd., Longgang District Shenzhen 518129 (CN)
(72) Inventor: SUN, Chengzhen Huawei Administration Building,, 518129 Shenzhen, Guangdong Province (CN); DUAN, Xiaoqin Huawei Administration Building,, 518129 Shenzhen, Guangdong Province (CN)
(74) Representative: Collin, Jérôme
(86) International application number: PCT/CN2006/001661
(87) International publication number: WO 2007/006235

(57) **Abstract**

A method and system for converting a message, for intercommunicating a message between a user terminal using a IP multimedia subsystem IMS message and a user terminal using a non-IMS message, comprises: converting the IMS message transmitted from a calling party to the non-IMS message format which can be received currently by the called party and transmitting it to the called party if judging the called party can not receive currently the IMS message, when the network receives the IMS message transmitted from the calling party to the called party; converting the non-IMS message transmitted from a calling party to the IMS message format and transmitting it to the called party if judging the called party can receive currently the IMS message, when the network receives the non-IMS message transmitted from the calling party to the called party. The system includes a message receiving judgment apparatus and a message application apparatus. The method and system of the present invention can realize intercommunicating a message when the calling and called user can not use the IMS service simultaneously.

## Description

### Field of the Invention

The present invention relates to the field of mobile telecommunications, and more particularly, to a method and system for enabling a User Equipment (UE) that uses IP Multimedia System (IMS) messages and a UE that uses non-IMS messages to intercommunicate messages with each other.

### Background of the Invention

With the emergence and development of various IP access techniques, how to enable IP UEs to provide services that are available in mobile networks has become a goal of the third generation partnership project (3GPP) standardization organization. In view of the fact that IP access based networks, such as Wireless Local Area Network (WLAN) networks and Next Generation Network (NGN) networks are becoming increasingly popular, how to enable various IP UEs or multi-mode UEs that support IP access and mobile network access, such as WLAN and WCDMA/GSM multi-mode UEs, to reuse existing mobile network service functionality entities and protocols as far as possible and to access mobile core networks via IP-based access networks is a matter of concern to operators.

In the existing specifications, messages are required to be transported in IMS format whenever possible. However, if either a calling subscriber or a called subscriber is incapable of using IMS services (for example, either the calling subscriber or the called subscriber does not register to an IMS service or only subscribers for some non-IMS networks presently), the calling and called subscriber may intercommunicate by other means. For example, when traveling to a place in which no IMS network is available, an IMS subscriber has to subscriber for a non-IMS network, such as a Circuit Switched (CS) domain, a Packet Switched (PS) domain, or a WLAN network. In this situation, for sending an IMS message from an IMS calling subscriber to the called subscriber, it is required to convert message format, i.e., convert the IMS message into non-IMS message. Similarly, in a case where a conventional CS or PS subscriber sends messages to an IMS subscriber, the messages must be converted from non-IMS format into IMS format for reception by the IMS subscriber. This is because, for example, a UE only with CS capability is only capable of processing E.164 format subscriber IDs that is incapable of being routed in an IMS network, and the difference between MAP message format and Session Initialization Protocol (SIP) message format causes messages not to be sent successfully due to the fact that the network does not support the message format, the called or calling subscriber ID unless the message format is converted properly. Therefore, for the purpose of enabling UEs that access different types of networks to intercommunicate message with each other, message format must be converted properly. However, the prior art has not disclosed a method for message format conversion at all.

### Summary of the Invention

Embodiments of the present invention provide a method and system for message conversion, thereby enabling a calling subscriber and a called subscriber to intercommunicate messages with each other if either the calling subscriber or the called subscriber is incapable of using IMS services.

The method according to an embodiment of the present invention includes:

if it is determined that a message from a calling subscriber to a called subscriber is a Session Initialization Protocol (SIP) based IP Multimedia System (IMS) message and that the called subscriber is incapable of receiving SIP based IMS messages currently,

converting the SIP based IMS message from the calling subscriber to the called subscriber into a non-IMS message that is capable of being received by the called subscriber currently, and forwarding the non-IMS message to the called subscriber;

if it is determined that a message from the calling subscriber to the called subscriber is a non-IMS message and that the called subscriber is capable of receiving SIP based IMS messages,

converting the non-IMS message from the calling subscriber to the called subscriber into a SIP based IMS message, and forwarding the SIP based IMS message to the called subscriber.

The method according to an embodiment of the present invention further includes:

converting a response message returned from the called subscriber into a message that is capable of being received by the calling subscriber, and forwarding the converted message to the calling subscriber.

In the method according to an embodiment of the present invention, the step of converting the SIP based IMS message from the calling subscriber to the called subscriber into a non-IMS message includes:

obtaining and converting calling subscriber ID and called subscriber ID in the SIP message into those in a format corresponding to a network type for which the called subscriber subscribes, for use in the non-IMS message that has been converted from the SIP message;

encapsulating the SIP message from the calling subscriber as a whole within the message body of the non-IMS message; or splitting the SIP message from the calling subscriber into a SIP message header and a SIP message body, and obtaining the non-IMS message by converting the SIP message header and the SIP message body into a non-IMS message header and a non-IMS message body respectively.

In the method according to an embodiment of the present invention, if the length of the SIP message from the calling subscriber is larger than the maximum length specified for the non-IMS message, splitting and converting the SIP message into multiple non-IMS messages according to a length specified for the non-IMS message, with all the multiple non-IMS messages except for the last one marked with a delivery uncompleted flag or a corresponding serial number and the last one marked with a delivery completed flag.

The method according to an embodiment of the present invention further includes: combining the multiple non-IMS messages into one non-IMS message according to the flags.

In the method according to an embodiment of the present invention, the step of converting the non-IMS message sent from the calling subscriber into a SIP based IMS message includes:

obtaining and converting calling subscriber ID and called subscriber ID in the non-IMS message into those in SIP URI format that is capable of being identified by a SIP message system, for use in a SIP message that has been converted from the non-IMS message;

encapsulating the non-IMS message sent from the calling subscriber as a whole within the message body of the SIP message; or

splitting the non-IMS message from the calling subscriber into a non-IMS message header and a non-IMS message body, and obtaining the SIP message by converting the non-IMS message header and the non-IMS message body into a SIP message header and a SIP message body respectively.

In the method according to an embodiment of the present invention, if the length of the non-IMS message sent from the calling subscriber is larger than the maximum length specified for the SIP message, splitting and converting the non-IMS message into multiple SIP messages according to a length specified for the SIP message, with all the multiple SIP messages except for the last one marked with a delivery uncompleted flag or a corresponding serial number and the last one marked with a delivery completed flag.

The method according to an embodiment of the present invention further includes: combining the multiple SIP messages into one SIP message according to the flags.

In the method according to an embodiment of the present invention, the conversion between SIP based IMS and non-IMS messages is performed by a separate application server or a functional module arranged in an IP-SM-GW or in an SM-SC.

The method according to an embodiment of the present invention further includes:

converting a delivery report message as the response message returned by the called subscriber into a message that is capable of being received by the calling subscriber; and

obtaining and converting calling subscriber ID and called subscriber ID into those in a format corresponding to a network type for which the calling subscriber subscribes.

In the method according to an embodiment of the present invention, wherein the step of converting the delivery report message into a message that is capable of being received by the calling subscriber includes:

if the delivery report message is a SIP message, defining a SIP response message whose parameters are defined with reference to Mobile Application Part (MAP) message parameters, obtaining and converting delivery report message related data returned by the called subscriber into MAP message parameters, and converting the SIP response message into a MAP delivery report message carrying corresponding delivery report information; and

if the delivery report message is a MAP message, obtaining and converting MAP delivery report data returned from the called subscriber into the parameters in the SIP response message, and converting the MAP response message into the SIP response message carrying corresponding delivery report information.

In the method according to an embodiment of the present invention, the conversion of the delivery report message into a message that is capable of being received by the calling subscriber includes:

if the delivery report message is a SIP message, setting an ID for the SIP delivery report message and using the SIP delivery report message with the ID as a delivery report message, carrying MAP delivery report parameter related information in the message body of the SIP delivery report message with the ID, obtaining and converting the content of the SIP delivery report message with the ID into a MAP delivery report message carrying corresponding parameters; and

if the delivery report message is a MAP message, obtaining and converting MAP delivery report data returned by the called subscriber into the content of the SIP delivery report message with the ID.

In the method according to an embodiment of the present invention, the message application server or the functional module obtains and converts MAP delivery report data returned from the called subscriber into the SIP response message.

The system according to an embodiment of the present invention includes:

a message receiving and determining device connected to a message sending/receiving entity in a calling side network, adapted to receive a message from the calling side network, to determine whether to perform message format conversion by determining whether the message is capable of being received currently by a called subscriber, and to forward the message to an application server to perform the conversion if determined;

the application server connected to a message sending/receiving entity in a called side network, adapted to perform message format conversion between IMS and non-IMS messages and to forward the converted message to the called subscriber via the message sending/receiving entity in the called side network; to receive and convert a delivery report message returned from the called subscriber, and to forward the converted delivery report message to the calling subscriber via the message receiving and determining device and the message sending/receiving entity in the calling side network.

In the system according to an embodiment of the present invention, the application server includes:

a message format conversion module connected to the message receiving and determining device and to a message sending/delivery report receiving module, adapted to perform message format conversion between IMS and non-IMS messages;

the message sending/delivery report receiving module connected to the message sending/receiving entity in the called side network, adapted to send the converted message to the message sending/receiving entity in the called side network which forwards the converted message to the called subscriber; to receive and forward a delivery report message returned from the called subscriber to the message format conversion module,

the message format conversion module being further adapted to convert the delivery report message and forward the converted delivery report message to the calling subscriber via the message receiving and determining device and the message sending/receiving entity in the calling side network.

In the system according to an embodiment of the present invention, the application server is a separate network entity or a functional module arranged in an IP message gateway (IP-SM-GW) or in a short message center (SM-SC).

The advantages of the present invention are as follows.

Using the method according to an embodiment of the present invention, the conversion of the message format between IMS and non-IMS messages can be implemented so as to enable intercommunication of IMS and non-IMS messages between calling and called subscribers. Further, non-IMS response messages returned from a called subscriber is capable of being converted into IMS messages, which are then returned to a calling subscriber, or IMS response messages returned from the called subscriber are capable of being converted into messages in a format that is capable of being received by the calling subscriber, such that the calling and called subscribers is capable of intercommunicating messages with each other in the case that either the calling subscriber or the called subscriber is incapable of using IMS services.

### Brief Description of the Drawings

Embodiments of the present invention will now be described in more detail with reference to the following drawings, in which:

Figure 1a and Figure 1b schematically illustrates a flow diagram of messages of a call initiated by a calling subscriber according to an embodiment of the present invention.

Figure 2 is a flow diagram schematically illustrating processes of parsing a called subscriber ID by an application server.

Figure 3 is a flow diagram schematically illustrating processes of processing a delivery report message by an application server.

Figure 4 is a flow diagram schematically illustrating conversion and transmission of messages after a called side network receives an IMS message.

Figure 5 is another flow diagram schematically illustrating conversion and transmission of messages after a called side network receives an IMS message.

Figure 6 is another flow diagram schematically illustrating conversion and transmission of messages after a called side network receives a non-IMS message.

Figure 7 is another flow diagram illustrating conversion and transmission of messages after a called side network receives a non-IMS message.

Figure 8 schematically illustrates an embodiment of a system for message conversion according to an embodiment of the present invention.

### Detailed Description of the Embodiments

An embodiment of the present invention provides a method for enabling a UE that uses IMS messages and a UE that uses non-IMS messages to intercommunicate messages with each other, the method includes:

if it is determined that a message from a calling subscriber to a called subscriber is an IP Multimedia System (IMS) message and that the called subscriber is incapable of receiving Session Initialization Protocol (SIP) based IMS messages currently,

converting the SIP based IMS message from the calling subscriber to the called subscriber into a non-IMS message that is capable of being received by the called subscriber currently, and forwarding the non-IMS message to the called subscriber; and

if it is determined that a message from the calling subscriber to the called subscriber is a non-IMS message and that the called subscriber is capable of receiving SIP based IMS messages,

converting the non-IMS message from the calling subscriber to the called subscriber into a SIP based IMS message, and forwarding the SIP based IMS message to the called subscriber.

The conversion between IMS and non-IMS messages may be performed by a separate application server or a functional module arranged in an IP-SM-GW or in an SM-SC.

A delivery report message returned from the called subscriber is converted by the application server or the functional module into a message that is capable of being received by the calling subscriber.

The conversion of message format between IMS and non-IMS messages is illustrated as follows:

Example 1- conversion from a SIP message into a non-IMS message

There are the following three methods:

(1) The entire SIP message sent from the calling subscriber is encapsulated within the message body of the non-IMS message, and calling subscriber ID and called subscriber ID are obtained and converted into those in a format corresponding to a network type for which the called subscriber subscribes, such as E.164 or Network Access Identifier (NAI) that is capable of being identified by a non-IMS message system, for use in the non-IMS message that has been converted from the SIP message.

(2) The SIP message is split into a message header and a message body, the message header and the message body are extracted, and the SIP message is converted into a non-IMS message: the message header of the SIP message is converted into the message header of a non-IMS message and the message body of the SIP message is converted into the message body of a non-IMS message; and calling subscriber ID and called subscriber ID are converted into those in a format corresponding to a network type for which the called subscriber subscribes, such as E.164 or Network Access Identifier (NAI) that is capable of being identified by a non-IMS message system, for use in the non-IMS message that has been converted from the SIP message.

If the length of SIP message is larger than the maximum length specified for the non-IMS message, the SIP message is split and converted into multiple non-IMS messages with a length specified for the non-IMS message. All the multiple non-IMS messages except for the last one is marked with a delivery uncompleted flag or a corresponding serial number indicating that the message has not been completely delivered. The last one is marked with a delivery completed flag indicating that the message has been completely delivered. If possible, a message receiving end can combine the multiple non-IMS messages into one message according to the delivery uncompleted flag and the delivery completed flag.

Example 2-conversion from a non-SIP message into an IMS message

(1) The entire non-IMS message is encapsulated within the message body of the SIP message. Calling subscriber ID and called subscriber ID in the non-IMS message are obtained and converted into those in SIP URI format that is capable of being identified by a SIP message system, for use in the SIP message that has been converted from the non-IMS message;

(2) The non-IMS message is split into a message header and a message body, the message header and the message body are extracted, and the non-IMS message is converted into a SIP message: the message header of the non-IMS message is converted into the message body of the SIP message, and the message body of the non-IMS message is converted into the message body of the SIP message. Calling subscriber ID and called subscriber ID in the non-IMS message are obtained and converted into those in SIP URI format that is capable of being identified by a SIP message system, for use in the SIP message that has been converted from the non-IMS message.

If the length of the non-IMS message is larger than the maximum length specified for the SIP message, the non-IMS message is split and converted into multiple SIP messages with a length specified for the SIP message, with all of the multiple SIP messages marked with a delivery uncompleted flag or a corresponding serial number indicating that the message has not been completely delivered, except for the last one, which is marked with a delivery completed flag indicating that the message has been completely delivered. If possible, a message receiving end can combine the multiple SIP messages into one message according to the delivery uncompleted flag and the delivery completed flag.

During the intercommunication between IMS and non-IMS messages, the conversion of format of a delivery report message may be illustrated by the following examples:

(1) a SIP response message, whose parameters are defined with reference to Mobile Application Part (MAP) message parameters, is defined; delivery report message related data returned from the called subscriber is obtained and converted by the separated application server or the functional module into MAP message parameters and the SIP response message is converted by the separated application server or the functional module into a MAP delivery report message; or, MAP delivery report data returned from the called subscriber is obtained and converted into the parameters in the SIP response message, and the MAP response message is converted into the SIP response message;

(2) an ID is set for the SIP message, and the SIP message with the ID is used as a delivery report message; by the UE of the called subscriber, MAP delivery report parameter related information is carried in the message body of the SIP message with the ID; the content of the SIP message with the ID is obtained and converted by the application server or the functional module into a MAP delivery report message carrying corresponding parameters, or MAP delivery report data returned from the called subscriber is obtained and converted into the content of the SIP message with the ID.

(3) MAP delivery report data returned from the called subscriber is obtained and converted by the application server or the functional module into the SIP response message with corresponding delivery report information.

The method according to embodiments of the present invention will now be described in detail hereinafter with reference to the accompanying drawings.

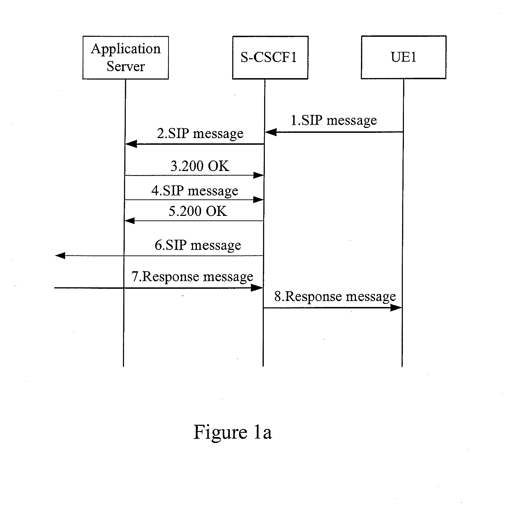

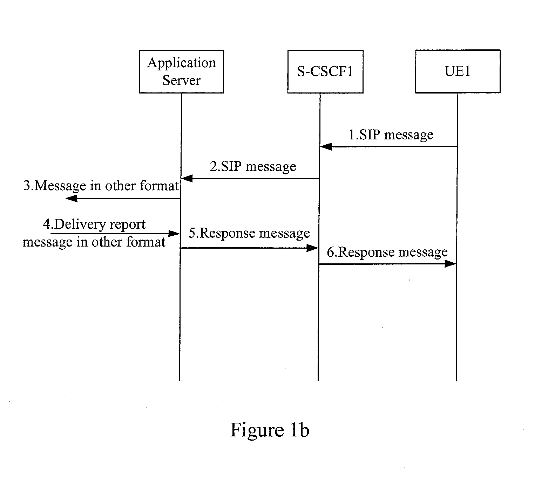

Figure 1a and Figure 1b schematically illustrates a flow diagram of messages of a call initiated by a calling subscriber according to an embodiment of the present invention.

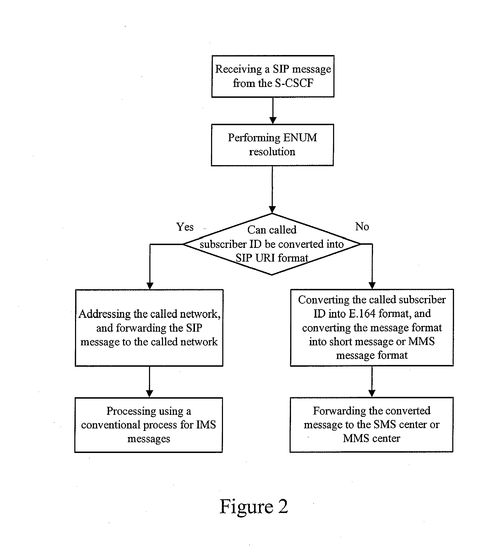

As shown in Figure 1a and 1b, a UE1 generates an instant message to be sent and sends a SIP message to a service-call session control functionality entity 1 (S-CSCF1). The S-CSCF1 performs service control and sends an IMS message as normal after determining that called subscriber ID is in SIP URI format, or forwards the SIP message to an IP Short Message Gateway (IP-SM-GW) used as an application server after determining that the called subscriber ID is in TEL URI format. The IP-SM-GW used as an application server performs ENUM (Telephone Number Mapping) resolution on the called subscriber ID. As shown in Figure 2, a flow diagram schematically illustrating processes of parsing a called subscriber ID by an application server is illustrated.

a. If the called subscriber ID is successfully converted into SIP URI format, a message indicating that the called subscriber has been successfully converted into SIP URI called subscriber ID is returned to the S-CSCF1, which addresses an IMS network for which the called subscriber subscribes according to the SIP URI called subscriber ID and forwards the message to the IMS network for which the called subscriber subscribes, as shown in steps 1-8 in Figure 1a. How the S-CSCF1 forward the SIP message to the IMS network for which the called subscriber subscribes is similar to or the same as the prior art, and therefore will not be described in detail here.

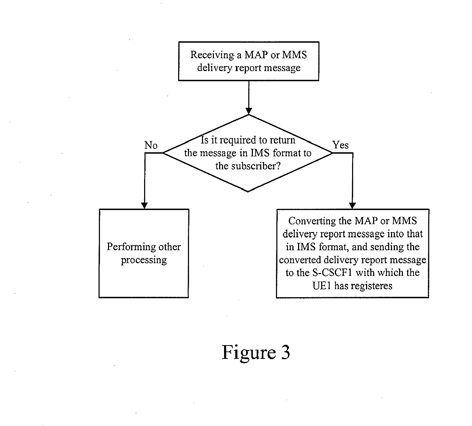

b. Otherwise, the called subscriber ID in TEL URI format is converted into that in E.164 format, and the IMS message format is converted into Short Message Service (SMS) or Multi-Media Message Service (MMS) message format according to the content carried in the IMS message, and then the converted message is forwarded to a conventional SMS center or MMS center, as shown in Figure 1b. If the IP-SM-GW used as an application server receives a non-IMS delivery report message returned from the called subscriber (for example, if a MAP SMS message is sent to the called subscriber, a MAP delivery report message is returned by the called subscriber). As shown in Figure 3, the IP-SM-GW used as an application server, after determining that it is required to return an IMS message to the UE1, converts the non-IMS report message into an IMS delivery report message and sends the IMS delivery report message to the S-CSCF1 for which the UE1 subscribes, otherwise, performs other processing.

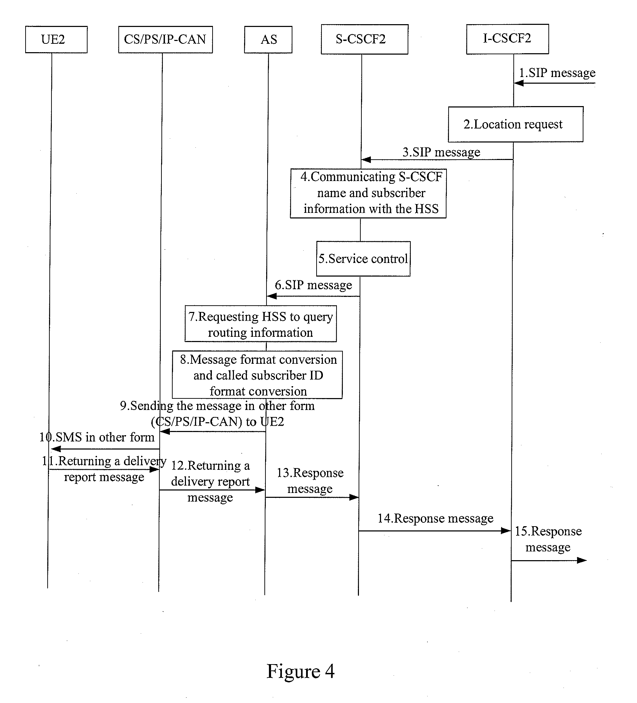

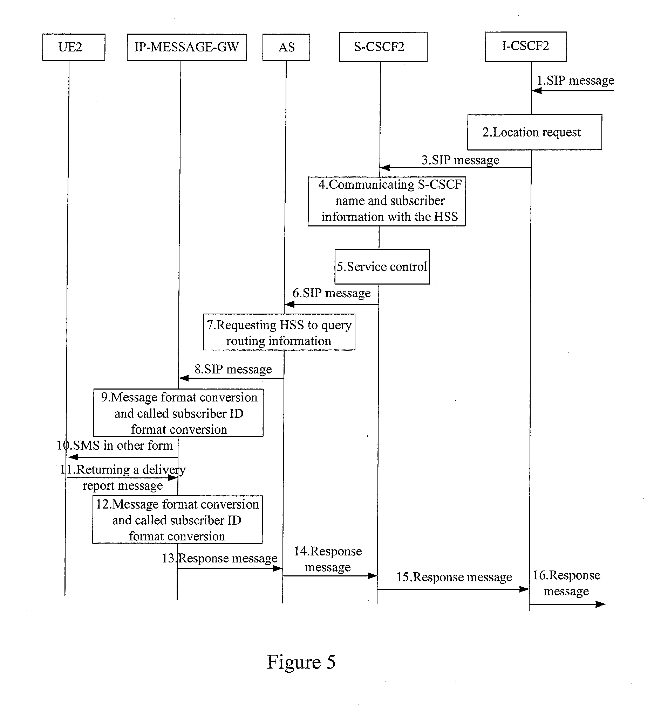

It can be seen from the above description that, if the calling subscriber sends a message in the format of an IMS instant message and if the called subscriber is capable of receiving the IMS format message normally over the IMS network, a process of terminating the message is similar to that in the prior art, while, if the called subscriber subscribes for a non-IMS network and the message needs to be sent over the non-IMS network, the conversion of message format between IMS message and non-IMS message is required in order to ensure that the called subscriber is capable of receiving the message correctly. The message format conversion functionality can reside in an application server providing an unregistered service or an IP-SM-GW, as shown in Figure 4 and Figure 5.

Figure 4 shows a message delivery process in the case that the message format conversion functionality resides in an application server providing an unregistered service as described below.

1. An Inquiry-Call Session Control Functionality (I-CSCF) entity receives a SIP message from a calling subscriber.

2. The I-CSCF sends a Cx Location Query (Cx-LocQuery) to a Home Subscriber Server (HSS), requesting for the S-CSCF of a called subscriber UE2. If the HSS queries that the UE2 is an IMS subscriber that does not registered with the IMS network but subscribes for some unregistered service (status), the HSS returns to the I-CSCF the S-CSCF for which the called subscriber subscribes before registration or a set of S-CSCFs that meet the requirement in the Cx Location Query according to the location where the called subscriber is located before the registration and the requirement in the Cx Location Query. The I-CSCF selects an appropriate S-CSCF2 according to the S-CSCF or the set of S-CSCFs before registration sent from the HSS.

3. The I-CSCF forwards the SIP message to the selected S-CSCF2.

4. After receiving the message, the S-CSCF2 sends a Cx-Put/Cx-Pull (carrying a public subscriber ID, S-CSCF name) to the HSS. The HSS stores the S-CSCF2 name of the unregistered public subscriber ID and returns a Cx-Put Resp/Cx-Pull Resp (carrying subscriber information) to the S-CSCF2. The S-CSCF2 stores the subscriber information such as public subscriber ID.

5. The S-CSCF2 invokes service logic suitable for the unregistered service for which the subscriber subscribes.

6. The S-CSCF2 forwards the SIP message to the application server.

7. The application server determines whether to forward the message by any other means,

and, if so, stores the message and waits for a notification that the subscriber registers. IMS;

otherwise, initiates a routing querying request to the HSS so as to obtain routing information, with the routing querying request indicating the message transmission modes that is capable of being received by the application server, such as some IP-based message transmission modes, including CS, PS and/or WLAN, etc. If the called subscriber registers with other network (e.g., a CS domain, a PS domain, I-WLAN or Wimax, etc.), the HLR/HSS returns to the application server a priority-sorted list of network addresses with which the subscriber registers, including Mobile Service Center (MSC) addresses, Service GPRS Support Node (SGSN) addresses, and/or IP-SM-GW addresses.

8. According to the list of network addresses with which the subscriber registers, the application server selects corresponding transmission network, converts the SIP message format into corresponding message format, converts the called subscriber ID into those in a format corresponding to a network type for which the called subscriber subscribes, such as E.164 or NAI, and re-encapsulates the converted message.

9. The application server sends the converted message to a message network element, such as MSC, SGSN, or IP-SM-GW, for which the called subscriber subscribes.

10. The message network element for which the called subscriber subscribes forwards the message to the called UE2.

11. The UE2 returns a delivery report message indicating successful reception after receiving the message.

12. The message network element for which the called subscriber subscribes returns the delivery report message to the application server.

13. Upon receiving the delivery report message, the application server converts the delivery report message into an appropriate SIP acknowledgment response message.

14. The S-CSCF2 forwards the appropriate acknowledgment response message to the I-CSCF2.

15. The I-CSCF2 forwards the appropriate acknowledgment response message to the calling network.

In blocks 13-15, the application server may also return an acknowledgment response message upon receiving the message from the S-CSCF2.

Figure 5 shows a message delivery process in the case that the message format conversion functionality resides in an IP-SM-GW as described below.

The steps 1-7 in Figure 5 are identical to those in Figure 4, and therefore will not be described here.

8. If the application server providing the unregistered service selects to forward the message via the IP-SM-GW, it forwards the message directly to the IP-SM-GW.

9. The IP-SM-GW converts the SIP message format into a message format corresponding to the current called network, converts the called subscriber ID into those in a format corresponding to a network type for which the called subscriber subscribes, such as E.164 or NAI.

10. The IP-SM-GW forwards the converted message to the called subscriber.

11. The called UE2 returns a reception success delivery report message after receiving the message.

12. After receiving the delivery report message, the IP-SM-GW converts the delivery report message into a SIP acknowledgement response message.

13. The IP-SM-GW returns the converted SIP acknowledgement response message to the application server providing the unregistered service.

14. The application server returns the acknowledgement response message to the S-CSCF2.

15. The S-CSCF2 returns the acknowledgement response message to the I-CSCF2.

16. The I-CSCF2 returns the acknowledgement response message to the calling network.

In the steps in blocks 14-16, the application server can also return an acknowledgment response message after receiving the message from the S-CSCF2.

During the process in which the calling subscriber initiates a service call, if the called subscriber ID is in TEL URI format and it is impossible for the IP-MESSSAGE-GW used as an application server to convert the TEL URI format into SIP URI format by ENUM querying, the IP-SM-GW used as an application server converts the called subscriber ID in TEL URI format into that in E.164 format, converts the message format into SMS or MMS message format according to the content carried in the message, and then forwards the message to a conventional SMS center or MMS center, which processes the message in the same manner as that used in the prior art.

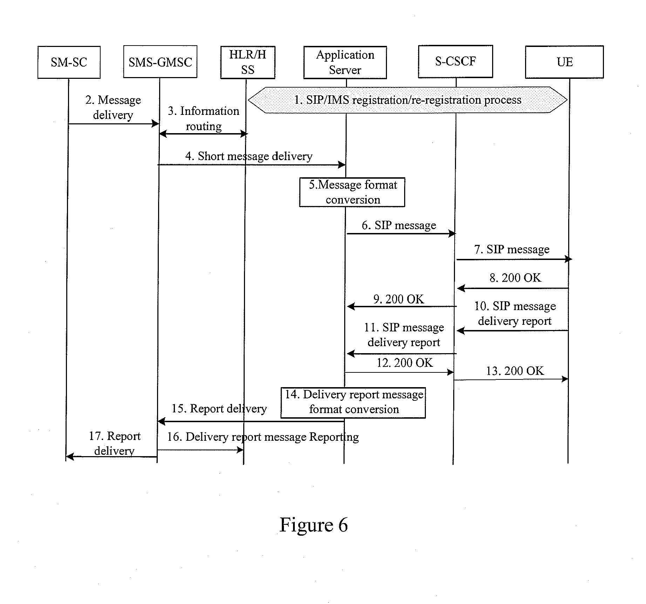

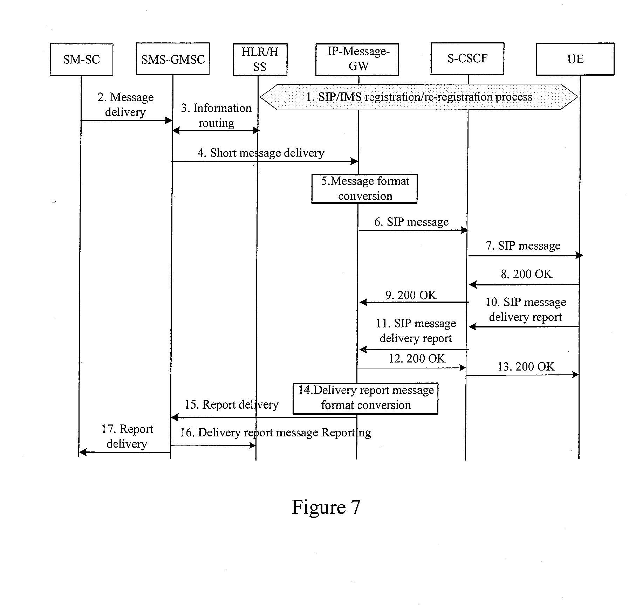

If the called subscriber is an IMS UE and the calling subscriber who initiates the message is a non-IMS subscriber, e.g. a CS subscriber, the initiated message is a conventional MAP short message or an MMS message. In order to be successfully sent to the called subscriber, the conventional MAP short message or MMS message needs to be converted into an IMS message that is capable of being received by the called subscriber. The format conversion functionality can reside in the application server or in the IP-SM-GW, and the message delivery process is as shown in Figure 6 and Figure 7.

Figure 6 shows a message delivery process in the case that the message format conversion functionality resides in an application server as described below.

1. A UE performs a normal registration/re-registration process.

2. A Short Message Service Center (SM-SC) forwards a short message to be sent to a called subscriber to a Short Message Service - Gateway of Mobile Service Center (SMS-GMSC).

3. The SMS-GMSC should indicate that it is capable of receiving IP messages when obtaining routing information from an HLR/HSS, whereby the HLR/HSS returns the address of the application server to the SMS-GMSC if the called subscriber subscribes for IMS services.

4. The SMS-GMSC sends a short message to the application server in the same manner as that it sends a short message to the MSC or SGSN, with the MSISDN of a destination UE carried in the short message.

5. The application server utilizes a local database (or other databases, a conversion device, etc.) to convert the MSISDN of the destination UE into the SIP URI of the UE, and to convert the short message into that in SIP message format.

6. The application server sends the converted message in SIP message format to the S-CSCF.

7. The S-CSCF forwards the SIP message to the UE.

8. The UE returns a 200 OK response to the S-CSCF.

9. The S-CSCF returns the 200 OK response to the application server.

10. The UE sends a SIP message delivery report message to the S-CSCF.

11. The S-CSCF sends the delivery report message to the application server.

12. The application server returns a 200 OK acknowledge message transmission report to the S-CSCF.

13. The S-CSCF returns the 200 OK acknowledge message transmission report to the UE.

14. The application server converts the SIP message delivery report message, according to the content thereof, into a MAP message delivery report message.

15. The application server sends the MAP message delivery report message to the SMS-GMSC.

16. The SMS-GMSC sends the MAP message delivery report message to the HSS.

17. The SMS-GMSC sends the MAP message delivery report message to the SMC.

In above process, the application server may be a separate functionality entity or a functional module in other application server.

Figure 7 shows a message delivery process in the case that the message format conversion functionality resides in an IP-SM-GW as described below.

1. A UE performs a normal registration/re-registration process.

2. An SMC forwards a short message to be sent to a called subscriber to the SMS-GMSC.

3. The SMS-GMSC should indicate that it is capable of receiving IP messages when obtaining routing information from an HLR/HSS, whereby the HLR/HSS returns the address of the IP-SM-GW to the SMS-GMSC if the called subscriber subscribes for IMS services.

4. The SMS-GMSC sends a short message to the IP-SM-GW in the same manner as that in which it sends a short message to the MSC or SGSN, with the MSISDN of a destination UE carried in the short message.

5. The IP-SM-GW utilizes a local database to convert the MSISDN of the destination UE into the SIP URI of the UE, and to convert the short message into that in SIP message format.

6. The IP-SM-GW sends the converted message in SIP message format to the S-CSCF.

7. The S-CSCF forwards the SIP message to the UE.

8. The UE returns a 200 OK response to the S-CSCF.

9. The S-CSCF returns the 200 OK response to the IP-SM-GW.

10. The UE sends a SIP message delivery report message to the S-CSCF.

11. The S-CSCF sends the delivery report message to the IP-SM-GW.

12. The IP-SM-GW returns a 200 OK acknowledge message transmission report to the S-CSCF.

13. The S-CSCF returns the 200 OK acknowledge message transmission report to the UE.

14. The IP-SM-GW converts the SIP message delivery report message, according to the content thereof, into a MAP message delivery report message.

15. The IP-SM-GW sends the MAP message delivery report message to the SMS-GMSC.

16. The SMS-GMSC sends the MAP message delivery report message to the HSS.

17. The SMS-GMSC sends the MAP message delivery report message to the SMC.

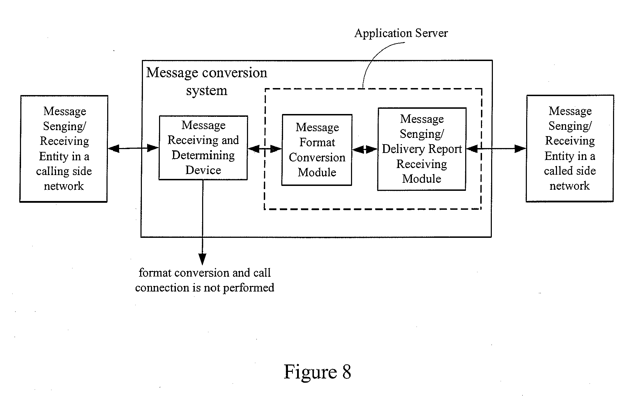

On the basis of the method embodiments above, a system for message conversion is provided according to an embodiment of the present invention. As shown in Figure 8, the system may include a message receiving and determining device and an application server.

The message receiving and determining device is connected to a message sending/receiving entity in a calling side network, and is adapted to receive a message from the calling side. If the calling side network is an IMS network, the message sending/receiving entity in the calling side network may be an S-CSCF or I-CSCF; and if the calling side network is a PS or CS network, the message sending/receiving entity may be an SMS-GMSC, and the like.

The message receiving and determining device determines whether to perform message format conversion by determining whether the message is capable of being received currently by a called subscriber, and forwards the message to an application server to perform the conversion if determined.

When receiving an IMS message sent from the calling side and determining that the called subscriber is incapable of receiving IMS messages currently, the message receiving and determining device forwards the IMS message to the application server, which converts the IMS message into a message in a format that is capable of being received by the called subscriber currently.

When receiving a non-IMS message sent from the calling subscriber to the called subscriber and determining that the called subscriber is capable of receiving IMS messages currently, the message receiving and determining device forwards the non-IMS message to the application server, which converts the non-IMS message into an IMS message.

The application server is connected to a message sending/receiving entity in a called side network, and is adapted to perform message format conversion between IMS and non-IMS messages and to forward the converted message to the called subscriber via the message sending/receiving entity in the called side network. If the called side network is an IMS network, the message sending/receiving entity in the called side network may be an S-CSCF or I-CSCF, and if the called side network is a PS or CS network, the message sending/receiving entity may be an SMS-GMSC, and the like.

The application server is also configured to receive and convert a delivery report message returned from the called subscriber, and to forward the converted delivery report message to the calling subscriber via the message receiving and determining device and the message sending/receiving entity in the calling side network.

The application server may further include a message format conversion module and a message sending/delivery report receiving module.

The message format conversion module is connected to the message receiving and determining device and to a message sending/delivery report receiving module, and is adapted to perform message format conversion between IMS and non-IMS messages.

The message sending/delivery report receiving module is connected to the message sending/receiving entity in the called side network, and is adapted to send the converted message to the message sending/receiving entity in the called side network which forwards the converted message to the called subscriber, to receive and forward a delivery report message returned from the called subscriber to the message format conversion module, the message format conversion module being further adapted to convert the delivery report message and forward the converted delivery report message to the calling subscriber via the message receiving and determining device and the message sending/receiving entity in the calling side network.

The application server is a separate network entity or a functional module arranged in an IP-SM-GW or in an SM-SC.

In the above description, the invention has been described in conjunction with specific exemplary embodiments thereof. It is obvious to those skilled in the art that various changes and modifications may be made to the present invention without departing from the scope of the present invention, and it is intended that the present invention covers these changes and modifications provided that they fall within the scope of the present invention as defined by the appended claims and their equivalents.

## Claims

1. A method for message conversion, comprising:
if it is determined that a message from a calling subscriber to a called subscriber is a Session Initialization Protocol (SIP) based IP Multimedia System (IMS) message and that the called subscriber is incapable of receiving SIP based IMS messages currently,
converting the SIP based IMS message from the calling subscriber to the called subscriber into a non-IMS message that is capable of being received by the called subscriber currently, and forwarding the non-IMS message to the called subscriber;
if it is determined that a message from the calling subscriber to the called subscriber is a non-IMS message and that the called subscriber is capable of receiving SIP based IMS messages,
converting the non-IMS message from the calling subscriber to the called subscriber into a SIP based IMS message, and forwarding the SIP based IMS message to the called subscriber.

2. The method according to claim 1, further comprising:
converting a response message returned from the called subscriber into a message that is capable of being received by the calling subscriber, and forwarding the converted message to the calling subscriber.

3. The method according to claim 1, wherein the step of converting the SIP based IMS message from the calling subscriber to the called subscriber into a non-IMS message comprises:
obtaining and converting calling subscriber ID and called subscriber ID in the SIP message into those in a format corresponding to a network type for which the called subscriber subscribes, for use in the non-IMS message that has been converted from the SIP message;
encapsulating the SIP message from the calling subscriber as a whole within the message body of the non-IMS message; or splitting the SIP message from the calling subscriber into a SIP message header and a SIP message body, and obtaining the non-IMS message by converting the SIP message header and the SIP message body into a non-IMS message header and a non-IMS message body respectively.

4. The method according to claim 3, wherein, if the length of the SIP message from the calling subscriber is larger than the maximum length specified for the non-IMS message, splitting and converting the SIP message into multiple non-IMS messages according to a length specified for the non-IMS message, with all the multiple non-IMS messages except for the last one marked with a delivery uncompleted flag or a corresponding serial number and the last one marked with a delivery completed flag.

5. The method according to claim 4, further comprising: combining the multiple non-IMS messages into one non-IMS message according to the flags.

6. The method according to claim 1, wherein the step of converting the non-IMS message sent from the calling subscriber into a SIP based IMS message comprises:
obtaining and converting calling subscriber ID and called subscriber ID in the non-IMS message into those in SIP URI format that is capable of being identified by a SIP message system, for use in a SIP message that has been converted from the non-IMS message;
encapsulating the non-IMS message sent from the calling subscriber as a whole within the message body of the SIP message; or
splitting the non-IMS message from the calling subscriber into a non-IMS message header and a non-IMS message body, and obtaining the SIP message by converting the non-IMS message header and the non-IMS message body into a SIP message header and a SIP message body respectively.

7. The method according to claim 6, wherein, if the length of the non-IMS message sent from the calling subscriber is larger than the maximum length specified for the SIP message, splitting and converting the non-IMS message into multiple SIP messages according to a length specified for the SIP message, with all the multiple SIP messages except for the last one marked with a delivery uncompleted flag or a corresponding serial number and the last one marked with a delivery completed flag.

8. The method according to claim 7, further comprising: combining the multiple SIP messages into one SIP message according to the flags.

9. The method according to any of claims 1-8, wherein the conversion between SIP based IMS and non-IMS messages is performed by a separate application server or a functional module arranged in an IP-SM-GW or in an SM-SC.

10. The method according to claim 9, further comprising:
converting a delivery report message as the response message returned by the called subscriber into a message that is capable of being received by the calling subscriber; and
obtaining and converting calling subscriber ID and called subscriber ID into those in a format corresponding to a network type for which the calling subscriber subscribes.

11. The method according to claim 10, wherein the step of converting the delivery report message into a message that is capable of being received by the calling subscriber comprises:
if the delivery report message is a SIP message, defining a SIP response message whose parameters are defined with reference to Mobile Application Part (MAP) message parameters, obtaining and converting delivery report message related data returned by the called subscriber into MAP message parameters, and converting the SIP response message into a MAP delivery report message carrying corresponding delivery report information; and
if the delivery report message is a MAP message, obtaining and converting MAP delivery report data returned from the called subscriber into the parameters in the SIP response message, and converting the MAP response message into the SIP response message carrying corresponding delivery report information.

12. The method according to claim 10, wherein the conversion of the delivery report message into a message that is capable of being received by the calling subscriber comprises:
if the delivery report message is a SIP message, setting an ID for the SIP delivery report message and using the SIP delivery report message with the ID as a delivery report message, carrying MAP delivery report parameter related information in the message body of the SIP delivery report message with the ID, obtaining and converting the content of the SIP delivery report message with the ID into a MAP delivery report message carrying corresponding parameters; and
if the delivery report message is a MAP message, obtaining and converting MAP delivery report data returned by the called subscriber into the content of the SIP delivery report message with the ID.

13. The method according to claim 10, wherein the message application server or the functional module obtains and converts MAP status report data returned from the called subscriber into the SIP response message.

14. A system for message conversion, comprising:
a message receiving and determining device connected to a message seriding/receiving entity in a calling side network, adapted to receive a message from the calling side network, to determine whether to perform message format conversion by determining whether the message is capable of being received currently by a called subscriber, and to forward the message to an application server to perform the conversion if determined;
the application server connected to a message sending/receiving entity in a called side network, adapted to perform message format conversion between IMS and non-IMS messages and to forward the converted message to the called subscriber via the message sending/receiving entity in the called side network; to receive and convert a delivery report message returned from the called subscriber, and to forward the converted delivery report message to the calling subscriber via the message receiving and determining device and the message sending/receiving entity in the calling side network.

15. The system according to claim 14, wherein the application server comprises:
a message format conversion module connected to the message receiving and determining device and to a message sending/delivery report receiving module, adapted to perform message format conversion between IMS and non-IMS messages;
the message sending/delivery report receiving module connected to the message sending/receiving entity in the called side network, adapted to send the converted message to the message sending/receiving entity in the called side network which forwards the converted message to the called subscriber; to receive and forward a delivery report message returned from the called subscriber to the message format conversion module,
the message format conversion module being further adapted to convert the delivery report message and forward the converted delivery report message to the calling subscriber via the message receiving and determining device and the message sending/receiving entity in the calling side network.

16. The system according to claim 14, wherein the application server is a separate network entity or a functional module arranged in an IP message gateway (IP-SM-GW) or in a short message center (SM-SC).
